# EUROPÄISCHE PATENTSCHRIFT

(11) **EP 3 504 422 B1**
(45) Veröffentlichungstag und Bekanntmachung des Hinweises auf die Patenterteilung: **30.06.2021**
(21) Anmeldenummer: 17754104.2
(22) Anmeldetag: 02.08.2017
(51) Int. Cl.: F02M 59/36, F02M 59/44, F02M 59/46, F02M 59/48, F02M 63/00

(54) **ELEKTROMAGNETISCH BETÄTIGBARES SAUGVENTIL**
ELECTROMAGNETICALLY ACTUATABLE SUCTION VALVE
SOUPAPE D'ASPIRATION À COMMANDE ÉLECTROMAGNÉTIQUE

(30) Priorität: 23.08.2016 DE 102016215745
(43) Veröffentlichungstag der Anmeldung: 03.07.2019
(73) Patentinhaber: Robert Bosch GmbH, 70442 Stuttgart (DE)
(72) Erfinder: KOLB, Stefan, 71116 Gaertringen (DE); LANDENBERGER, Tobias, 73614 Schorndorf (DE); HOLM, Steffen, 70569 Stuttgart (DE); CICHON, Gabriel, 71640 Ludwigsburg (DE)
(86) Internationale Anmeldenummer: PCT/EP2017/069507
(87) Internationale Veröffentlichungsnummer: WO 2018/036765

(56) Entgegenhaltungen:
- WO-A1-00/15988
- WO-A1-2005/116442
- WO-A1-2015/082118
- DE-A1-102011 002 570
- US-A1- 2010 001 094

## Beschreibung

Die Erfindung betrifft ein elektromagnetisch betätigbares Saugventil für eine Kraftstoff-Hochdruckpumpe mit den Merkmalen des Oberbegriffs des Anspruchs 1.

### Stand der Technik

Aus der WO 2015/082118 A1 geht beispielhaft ein elektromagnetisch betätigbares Saugventil zur Befüllung eines Hochdruck-Elementraums einer Hochdruckpumpe mit Kraftstoff hervor. Das Saugventil ist hierzu in ein Gehäuseteil der Hochdruckpumpe integriert, so dass ein hubbeweglicher Ventilkolben des Saugventils über das Gehäuseteil geführt ist. Zur Betätigung des Ventilkolbens weist das Saugventil eine Magnetbaugruppe mit einer ringförmigen Magnetspule auf, die einen Polkern umgibt. Ein mit dem Ventilkolben koppelbarer Anker ist hubbeweglich in einer Führungsbuchse aufgenommen. Eine zwischen dem Anker und dem Polkern angeordnete Feder spannt den Anker in Richtung des Ventilkolbens vor, so dass dieser bei unbestromter Magnetspule über die Federkraft der Feder in einer Offenstellung gehalten wird. Wird die Magnetspule bestromt, bewegt sich der Anker entgegen der Federkraft der Feder in Richtung des Polkerns um einen zwischen dem Polkern und dem Anker ausgebildeten Arbeitsluftspalt zu schließen. Dabei löst sich der Anker vom Ventilkolben und eine am Ventilkolben abgestützte Ventilfeder vermag das Saugventil zu schließen. Zum Öffnen wird die Bestromung der Magnetspule beendet, so dass die zwischen dem Polkern und dem Anker angeordnete Feder den Ventilkolben mithilfe des Ankers aus ihrem Dichtsitz hebt und das Saugventil öffnet.

Bei der Bestromung erwärmt sich die Magnetspule. Die Temperaturen können dabei so stark ansteigen, dass eine die Magnetbaugrupe zumindest abschnittsweise umschließende Kunststoff-Umspritzung erweicht oder sogar bricht. Dies kann zu Kontaktierungsfehlern im Bereich eines durch die Kunststoff-Umspritzung gebildeten Steckers führen, so dass die Funktion des Saugventils nicht mehr gewährleistet ist. Es ist außerdem durch die DE 10 2014 220 757 A1 ein elektromagnetisch betätigbares Saugventil bekannt, bei dem der Polkern und ein Ventilkörper des Hydraulikmoduls durch eine Schweißhülse miteinander verbunden sind. Infolge von zwischen die Magnetbaugruppe und die Schweißhülse eindringender Feuchtigkeit kann es zu Beschädigungen der Schweißverbindungen der Schweißhülse aufgrund von Korrosion kommen.

Durch die WO 00/15988 ist ein elektromagnetisch betätigtes Ventil bekannt, das eine Magnetbaugruppe und ein Hydraulikmodul umfasst. Das Hydraulikmodul greift abschnittsweise in eine ringförmige Magnetspule der Magnetbaugruppe ein. Die Magnetbaugruppe weist einen Anker auf, der in einem mit einem Ventilkörper des Hydraulikmoduls verbundenen hülsenförmigen Gehäuseteil geführt ist, das zwischen dem Anker und der Magnetspule angeordnet ist. Das hülsenförmige Gehäuseteil ist aus Metall hergestellt und durch dieses ist mit dem Ventilkörper über eine Schweißverbindung verbunden. Durch das hülsenförmige Gehäuseteil ist ein Wärmeübergang von der Magnetspule auf das Hydraulikmodul ermöglicht. Durch das hülsenförmige Gehäuseteil wird jedoch keine Abdichtung zwischen der Magnetbaugruppe und dem Hydraulikmodul erreicht.

Ausgehend von dem vorstehend genannten Stand der Technik liegt der vorliegenden Erfindung die Aufgabe zugrunde, die Robustheit, insbesondere die Temperaturbeständigkeit, eines elektromagnetisch betätigbaren Saugventils zu erhöhen, sowie die Schweißhülse zu schützen so dass die vorstehend genannten Nachteile nicht auftreten.

Zur Lösung der Aufgabe wird das elektromagnetisch betätigbare Saugventil mit den Merkmalen des Anspruchs 1 vorgeschlagen. Vorteilhafte Weiterbildungen der Erfindung sind den Unteransprüchen zu entnehmen.

### Offenbarung der Erfindung

Das für eine Kraftstoff-Hochdruckpumpe vorgeschlagene elektromagnetisch betätigbare Saugventil umfasst eine Magnetbaugruppe und ein Hydraulikmodul. Das Hydraulikmodul greift dabei zumindest abschnittsweise in eine ringförmige Magnetspule der Magnetbaugruppe ein. Erfindungsgemäß ist bzw. sind zwischen der Magnetspule der Magnetbaugruppe und dem Hydraulikmodul ein Wärmeleitmaterial und/oder ein Wärmeleitkörper angeordnet. Bei einer Bestromung der Magnetspule verbessert bzw. verbessern das Wärmeleitmaterial und/oder der Wärmeleitkörper die Wärmeabfuhr über das Hydraulikmodul, wobei die Kühlfunktion des kraftstoffdurchflossenen Hydraulikmoduls genutzt wird. Das heißt, dass zumindest ein Teil der Wärme nach innen abgeführt wird, so dass die Funktion des Saugventils auch bei Betrieb mit hohen Umgebungstemperaturen sichergestellt ist.

Die Aufgabe des Wärmeleitmaterials bzw. des Wärmeleitkörpers besteht demnach darin, die Wärmeleitung zwischen Magnetbaugruppe und Hydraulikmodul zu optimieren. Dies ist insbesondere der Fall, wenn die Wärmeleitfähigkeit λ des Wärmeleitmaterials bzw. des Wärmeleitkörpers deutlich über der von Luft (etwa 0,026 W/m*K) liegt. Die Wärmeleitfähigkeit λ des Wärmeleitmaterials bzw. des Wärmeleitkörpers sollte daher mindestens 5 W/m*K betragen.

Das Hydraulikmodul umfasst einen in die Magnetspule eingreifenden Polkern, an dem das Wärmeleitmaterial und/oder der Wärmeleitkörper unmittelbar anliegt bzw. anliegen. Der vorzugsweise vollflächige Kontakt des Wärmeleitmaterials und/oder des Wärmeleitkörpers mit dem Polkern stellt eine hohe Wärmeübertragung sicher. Der Polkern ist über eine Schweißhülse mit einem Ventilkörper verbunden und das Wärmeleitmaterial und/oder der Wärmeleitkörper erstreckt bzw. erstrecken sich über die Schweißhülse hinweg. Durch die zusätzliche Abdichtfunktion des Wärmeleitmaterials bzw. des Wärmeleitkörpers ist die Schweißhülse vor Feuchtigkeit geschützt. Dadurch verringert sich die Gefahr einer Korrosion der Schweißnähte, die der Verbindung der Schweißhülse mit dem Polkern und/oder dem Ventilkörper dienen.

Vorzugsweise erfolgt die Anordnung des Wärmeleitmaterials und/oder des Wärmeleitkörpers unter Ausnutzung eines bereits vorhandenen Luftspalts, so dass die Maßnahmen zur Verbesserung der Wärmeabfuhr keinen Einfluss auf den Bauraumbedarf des Saugventils haben. Das Konzept lässt sich auf diese Weise bauraumneutral und ohne großen konstruktiven Mehraufwand umsetzen.

Mit der Optimierung der Wärmeabfuhr über das innen liegende Hydraulikmodul steigt die Temperaturbeständigkeit des Saugventils und damit dessen Robustheit. In der Folge erhöht sich auch die Lebensdauer des Saugventils. Ferner ist eine Erweiterung des Anwendungsbereichs möglich, da aufgrund der verbesserten Temperaturbeständigkeit höhere Stromstärken einsetzbar sind.

Bevorzugt ist bzw. sind das Wärmeleitmaterial und/oder der Wärmeleitkörper in einem Ringspalt zwischen der Magnetspule und dem Hydraulikmodul angeordnet. Da der Spulendraht einer Magnetspule in der Regel auf einem Spulenträger aufgewickelt ist, wird vorzugsweise der Ringspalt radial außen durch den Spulenträger der Magnetspule begrenzt. Es kann jedoch auch vorgesehen sein, dass die Magnetspule keinen Spulenträger aufweist und der Ringspalt durch die Wicklung der Magnetspule selbst begrenzt wird.

Üblicherweise ist der Ringspalt zwischen der Magnetspule und dem Hydraulikmodul mit Luft gefüllt. Da Luft jedoch ein vergleichsweise schlechter Wärmeleiter ist, kann über das im Ringspalt angeordnete Wärmeleitmaterial und/oder den im Ringspalt angeordneten Wärmeleitkörper die Wärmeabfuhr nach innen deutlich verbessert werden.

Des Weiteren bevorzugt ist das Wärmeleitmaterial eine Wärmeleitpaste. Die Wärmeleitpaste ermöglicht eine im Wesentlichen spaltfüllende Anordnung des Wärmeleitmaterials, so dass die Wärmeübertragung an den jeweiligen Grenzflächen verbessert wird. Ferner kann über die Wärmeleitpaste eine Abdichtung zwischen der Magnetbaugruppe und dem Hydraulikmodul erreicht werden, die zu einer weiteren Robustheitssteigerung des Saugventils führt.

Die Minimierung des Luftvolumens zwischen der Magnetspule und dem Hydraulikmodul mittels der Wärmeleitpaste besitzt ferner den Vorteil, dass beim Abkühlen nach einer Bestromung der Magnetspule weniger Feuchtigkeit in den Zwischenraum gezogen wird. Der Vorteil kommt selbst dann zum Tragen, wenn die Wärmeleitpaste selbst an Volumen verliert.

Sofern ein Wärmeleitkörper zwischen der Magnetspule und dem Hydraulikmodul vorgesehen ist, kann dieser im Wesentlichen die Form einer Hülse besitzen. Die Hülsenform erleichtert die Anordnung des Wärmeleitkörpers zwischen der Magnetspule und dem Hydraulikmodul. Insbesondere kann der zum Füllen eines Ringspalts zwischen der Magnetspule und dem Hydraulikmodul eingesetzt werden. Die Abmessungen des Wärmeleitkörpers sind daher bevorzugt den Abmessungen des Ringspalts angepasst.

Alternativ oder ergänzend wird vorgeschlagen, dass der Wärmeleitkörper elastisch verformbar ist, so dass fertigungs- und/oder montagebedingte Toleranzen über eine elastische Verformung des Wärmeleitkörpers ausgleichbar ist bzw. sind. Dadurch ist sichergestellt, dass der Wärmeleitkörper den Ringspalt zwischen der Magnetspule und dem Hydraulikmodul weitgehend ausfüllt, so dass sich die zuvor in Zusammenhang mit der Wärmeleitpaste genannten Vorteile hinsichtlich Wärmeübertragung und Abdichtung auch hier ergeben.

Darüber hinaus kann ein Wärmeleitkörper in Kombination mit einem Wärmeleitmaterial, insbesondere einer Wärmeleitpaste, eingesetzt werden, wobei das Wärmeleitmaterial vorrangig dazu dient, verbleibende Spalte und Hohlräume auszufüllen.

In Weiterbildung der Erfindung wird vorgeschlagen, dass das Wärmeleitmaterial und/oder der Wärmeleitkörper einen Axialspalt zwischen der Magnetbaugruppe und dem Hydraulikmodul zumindest partiell ausfüllt bzw. ausfüllen. Hierbei handelt es sich vorzugsweise um einen Axialspalt, der zwischen einer die Magnetspule zumindest abschnittsweisen umgebenden Kunststoff-Umspritzung der Magnetbaugruppe und dem Hydraulikmodul ausgebildet wird. Vorzugsweise erfolgt die Anordnung des Wärmeleitmaterials und/oder des Wärmeleitkörpers im Axialspalt unter Ausnutzung eines bereits vorhandenen Luftspalts, so dass die Maßnahmen zur Verbesserung der Wärmeabfuhr keinen Einfluss auf den Bauraumbedarf des Saugventils haben. Ferner wird auf diese Weise das Luftvolumen im Saugventil verringert, das keinen wesentlichen Beitrag zur Wärmeabfuhr leistet und darüber hinaus dazu neigt, Feuchtigkeit zu ziehen.

Bevorzugte Ausführungsformen der Erfindung werden nachfolgend anhand der beigefügten Zeichnungen näher erläutert. Diese zeigen:
Fig. 1 a) bis c) jeweils einen schematischen Längsschnitt durch ein unterschiedlich stark vormontiertes erfindungsgemäßes Saugventil gemäß einer ersten bevorzugten Ausführungsform,
Fig. 2 a) bis c) jeweils einen schematischen Längsschnitt durch ein unterschiedlich stark vormontiertes erfindungsgemäßes Saugventil gemäß einer zweiten bevorzugten Ausführungsform und
Fig. 3 einen schematischen Längsschnitt durch ein fertig montiertes erfindungsgemäßes Saugventil, das in eine Kraftstoff-Hochdruckpumpe integriert ist.

### Ausführliche Beschreibung der Zeichnungen

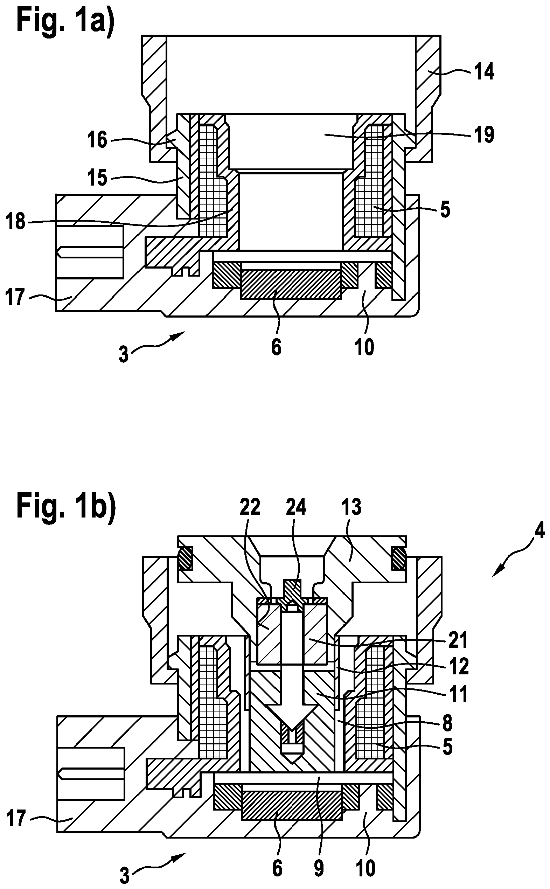

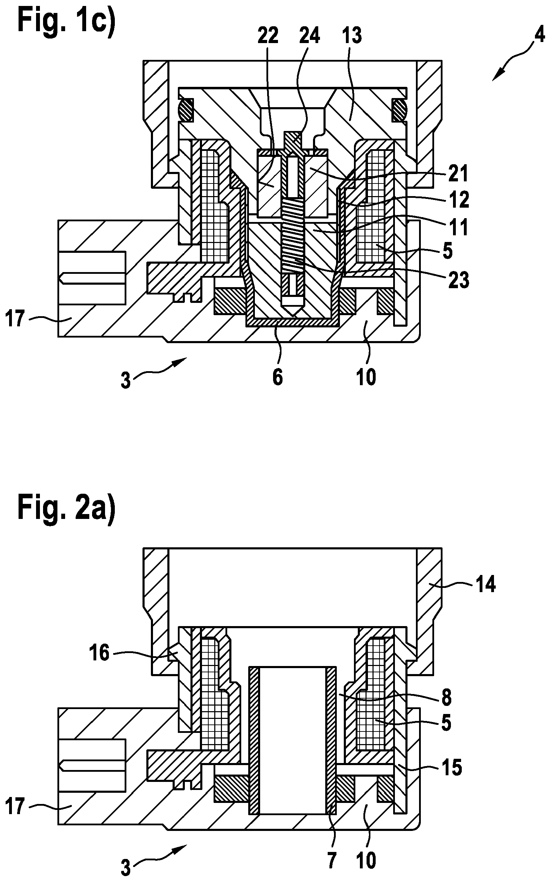

In der Fig. 1 ist eine erste bevorzugte Ausführungsform eines erfindungsgemäßen elektromagnetisch betätigbaren Saugventils 1 dargestellt, wobei die Abfolge der Fig. 1a) bis 1c) die einzelnen Montageschritte verdeutlicht.

Bei der Montage werden zwei bereits vormontierte Einheiten miteinander verbunden. Hierbei handelt es sich um eine Magnetbaugruppe 3 als erste vormontierte Einheit und ein Hydraulikmodul 4 als weitere vormontierte Einheit. Der Fig. 1a) ist lediglich die Magnetbaugruppe 3 zu entnehmen.

Die in der Fig. 1a) dargestellte Magnetbaugruppe 3 umfasst eine ringförmige Magnetspule 5, eine die Magnetspule 5 umgebende Magnethülse 15 sowie eine Kunststoff-Umspritzung 10, welche die Magnetspule 5 und die Magnethülse 15 endseitig umschließt. Die Kunststoff-Umspritzung 10 formt zugleich einen Stecker 17 aus, welcher dem Anschluss der Magnetspule 5 an eine Stromversorgung dient. Die Magnethülse 15 weist an ihrem freiliegenden Ende einen Bund 16 auf, an dem eine Spannmutter 14 zur Verbindung des Saugventils 1 mit einer Kraftstoff-Hochdruckpumpe 2 abgestützt bzw. abstützbar ist.

Die Magnetbaugruppe 3 ist in der Weise orientiert, dass sich der durch die ringförmige Magnetspule 5 bzw. durch den Spulenträger 18 der Magnetspule 5 begrenzte Hohlraum 19 nach oben öffnet. Es kann auch vorgesehen sein, dass kein Spulenträger 18 vorhanden ist und der Hohlraum 19 durch die Magnetspule 5 selbst begrenzt wird. In einem Bodenbereich des Hohlraums 19 ist ein Wärmeleitmaterial 6 in Form einer Wärmeleitpaste eingebracht, das einen Teil des Hohlraums 19 füllt.

Wird anschließend, wie in den Figuren 1b) und 1c) dargestellt, das Hydraulikmodul 4 in die Magnetbaugruppe 3 eingesetzt, wird ein Teil des Wärmeleitmaterials 6 in einen Ringspalt 8 zwischen der Magnetspule 5 bzw. wenn vorhanden dem Spulenträger 18 und dem Hydraulikmodul 4 verdrängt. Die Verdrängung wird über einen Polkern 11 des Hydraulikmoduls 4 bewirkt, der über eine Schweißhülse 12 mit einem Ventilkörper 13 verbunden ist. Das Wärmeleitmaterial 6 dringt dabei so weit in den Ringspalt 8 vor, dass die Schweißhülse 12 vollständig von dem Wärmeleitmaterial 6 abgedeckt ist. Die Schweißhülse 12 ist somit optimal vor Korrosion geschützt. Das Wärmeleitmaterial 6 wirkt spaltfüllend, so dass das ursprünglich in der Magnetbaugruppe 3 vorhandene Luftvolumen annähernd vollständig verdrängt wird. Denn sowohl der Ringspalt 8 als auch ein verbleibender Axialspalt 9 zwischen dem Polkern 11 und der Kunststoff-Umspritzung 10 sind mit dem Wärmeleitmaterial 6 gefüllt. Auf diese Weise wird die Wärmeabfuhr nach innen über das Hydraulikmodul 4 optimiert. Zugleich wird eine Abdichtung zwischen der Magnetbaugruppe 3 und dem Hydraulikmodul 4 geschaffen.

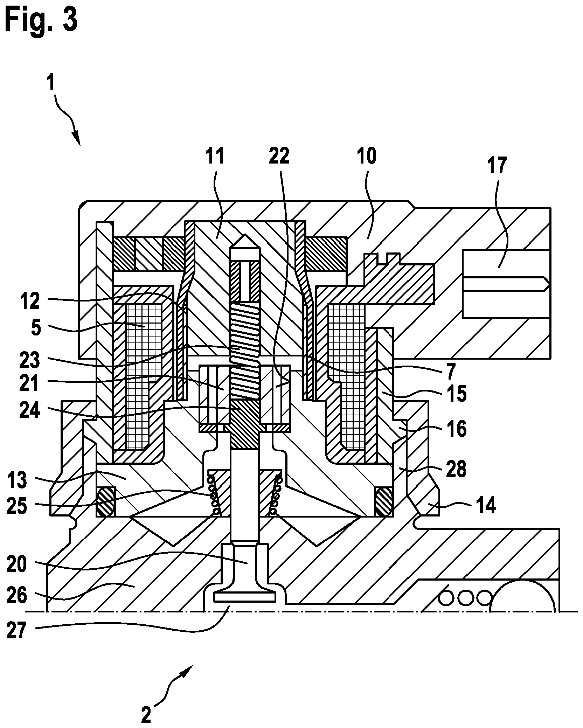

Das Hydraulikmodul 4 umfasst ferner einen Anker 21, der in einer zentralen Ausnehmung 22 des Ventilkörpers 13 hubbeweglich geführt ist. Zwischen dem Anker 21 und dem Polkern 11 ist eine Feder 23 angeordnet, die der axialen Vorspannung des Ankers 21 in Richtung eines Ventilstößels 20 (siehe Fig. 3) dient. Zur Kontaktierung des Ventilstößels 20 ist in den Anker 21 ein Kontaktstift 24 eingepresst.

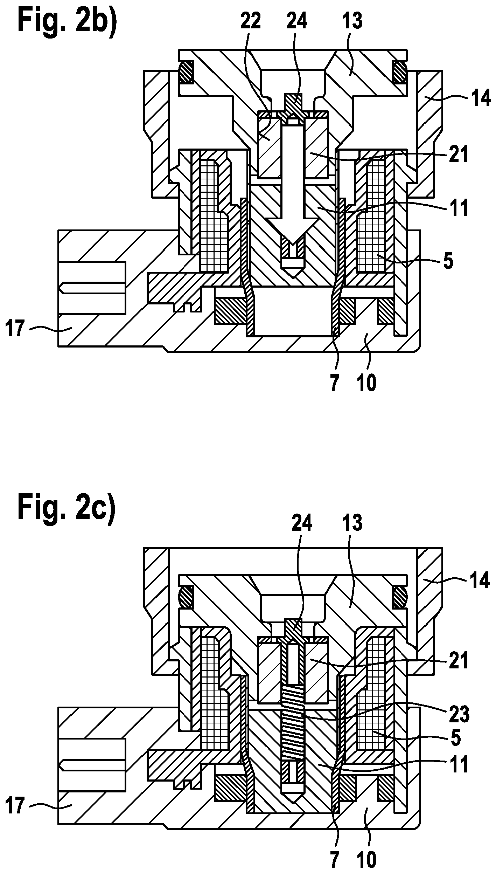

In der Fig. 2 ist eine weitere bevorzugte Ausführungsform eines erfindungsgemäßen elektromagnetisch betätigbaren Saugventils 1 dargestellt, wobei die Abfolge der Fig. 2a) bis 2c) wiederum die einzelnen Montageschritte verdeutlicht.

Die Magnetbaugruppe 3 der Fig. 2a) weist im Wesentlichen den gleichen Aufbau wie die der Fig. 1a) auf. Anstelle des Wärmeleitmaterials 6 ist jedoch in den Hohlraum 19 ein hülsenförmiger Wärmeleitkörper 7 eingesetzt, dessen Innendurchmesser geringfügig kleiner als der Außendurchmesser des Polkerns 11 des Hydraulikmoduls 4 gewählt ist. Das Material des Wärmeleitkörpers 7 ist jedoch unter Krafteinwirkung elastisch verformbar.

Wird nunmehr, wie in den Figuren 2b) und 2c) dargestellt, das Hydraulikmodul 4 mit dem Polkern 11 voran in den Hohlraum 19 eingesetzt, verformt sich der Wärmeleitkörper 7 und schmiegt sich dabei an den Spulenträger 18 der Magnetspule 5 oder die Magnetspule 5 selbst an, wenn kein Spulenträger 18 vorhanden ist. Somit füllt der Wärmeleitkörper 7 den Ringspalt 8 zwischen der Magnetspule 5 und dem Hydraulikmodul 4 annähernd vollständig aus. Die Höhe des Wärmeleitkörpers 7 ist derart bemessen, dass er bei fertig montiertem Saugventil 1 den Polkern 11 einschließlich der Schweißhülse 12 abdeckt.

In der Fig. 3 ist das Saugventil 1 der Fig. 2 fertig montiert dargestellt. Das Saugventil 1 ist in der Weise in einen Pumpenzylinderkopf 26 einer Kraftstoff-Hochdruckpumpe 2 integriert, dass der Ventilstößel 20 des Saugventils 1 unmittelbar in einen Hochdruck-Elementraum 27 der Kraftstoff-Hochdruckpumpe 2 öffnet. Die Befestigung des Saugventils 1 am Pumpenzylinderkopf 26 erfolgt mittels der Spannmutter 14, die hierzu auf einen Kragenabschnitt 28 des Pumpenzylinderkopfs 26 geschraubt ist.

Bei unbestromter Magnetspule 5 hält die am Anker 21 abgestützte Feder 23 - mittelbar über den Anker 21 und den Kontaktstift 24 - den Ventilstößel 20 entgegen der Federkraft einer weiteren Feder 25 geöffnet. Wird nun die Magnetspule 5 bestromt, baut sich ein Magnetfeld auf, dessen Magnetkraft den Anker 21 in Richtung des Polkerns 11 bewegt. Dabei löst sich der Anker 21 bzw. der Kontaktstift 24 vom Ventilstößel 20 und die Feder 25 vermag das Saugventil 1 zu schließen. Wird anschließend die Bestromung der Magnetspule 5 wirkt die Federkraft der Feder 23 wieder öffnend.

## Patentansprüche

1. Elektromagnetisch betätigbares Saugventil (1) für eine Kraftstoff-Hochdruckpumpe (2), umfassend eine Magnetbaugruppe (3) und ein Hydraulikmodul (4), wobei das Hydraulikmodul (4) zumindest abschnittsweise in eine ringförmige Magnetspule (5) der Magnetbaugruppe (3) eingreift,
**dadurch gekennzeichnet, dass** zwischen der Magnetspule (5) und dem Hydraulikmodul (4) ein Wärmeleitmaterial (6) und/oder ein Wärmeleitkörper (7) angeordnet ist bzw. sind, dass das Hydraulikmodul (4) einen in die Magnetspule (5) eingreifenden Polkern (11) umfasst, an dem das Wärmeleitmaterial (6) und/oder der Wärmeleitkörper (7) unmittelbar anliegt bzw. anliegen, dass der Polkern (11) über eine Schweißhülse (12) mit einem Ventilkörper (13) verbunden ist, und dass sich das Wärmeleitmaterial (6) und/oder der Wärmeleitkörper (7) über die Schweißhülse (12) hinweg erstreckt bzw. erstrecken und eine Abdichtfunktion für die Schweißhülse (12) aufweist bzw. aufweisen.

2. Saugventil nach Anspruch 1,
**dadurch gekennzeichnet, dass** das Wärmeleitmaterial (6) und/oder der Wärmeleitkörper (7) in einem Ringspalt (8) zwischen der Magnetspule (5) und dem Hydraulikmodul (4) angeordnet ist bzw. sind.

3. Saugventil nach Anspruch 1 oder 2,
**dadurch gekennzeichnet, dass** das Wärmeleitmaterial (6) eine Wärmeleitpaste ist.

4. Saugventil nach einem der vorhergehenden Ansprüche,
**dadurch gekennzeichnet, dass** der Wärmeleitkörper (7) im Wesentlichen die Form einer Hülse besitzt und/oder elastisch verformbar ist.

5. Saugventil nach einem der vorhergehenden Ansprüche,
**dadurch gekennzeichnet, dass** das Wärmeleitmaterial (6) und/oder der Wärmeleitkörper (7) einen Axialspalt (9) zwischen der Magnetbaugruppe (3), vorzugsweise zwischen einer die Magnetspule (5) zumindest abschnittsweisen umgebenden Kunststoff-Umspritzung (10) der Magnetbaugruppe (3), und dem Hydraulikmodul (4) zumindest partiell ausfüllt bzw. ausfüllen.

## Claims

1. Electromagnetically actuatable suction valve (1) for a high-pressure fuel pump (2), comprising a magnet assembly (3) and a hydraulic module (4), wherein the hydraulic module (4) engages at least in certain sections into an annular magnet coil (5) of the magnet assembly (3), **characterized in that** a heat-conducting material (6) and/or a heat-conducting body (7) are/is arranged between the magnet coil (5) and the hydraulic module (4), **in that** the hydraulic module (4) comprises a pole core (11), which engages into the magnet coil (5) and on which the heat-conducting material (6) and/or the heat-conducting body (7) rest(s) directly, **in that** the pole core (11) is connected to a valve body (13) via a welding sleeve (12), and **in that** the heat-conducting material (6) and/or the heat-conducting body (7) extend(s) beyond the welding sleeve (12) and have/has a sealing function for the welding sleeve (12).

2. Suction valve according to Claim 1,
**characterized in that** the heat-conducting material (6) and/or the heat-conducting body (7) is/are arranged in an annular gap (8) between the magnet coil (5) and the hydraulic module (4).

3. Suction valve according to Claim 1 or 2,
**characterized in that** the heat-conducting material (6) is a heat transfer compound.

4. Suction valve according to one of the preceding claims,
**characterized in that** the heat-conducting body (7) has substantially the shape of a sleeve and/or is elastically deformable.

5. Suction valve according to one of the preceding claims,
**characterized in that** the heat-conducting material (6) and/or the heat-conducting body (7) at least partially fill(s) an axial gap (9) between the magnet assembly (3), preferably between a plastic encapsulation (10), which surrounds the magnet coil (5) at least in certain sections, of the magnet assembly (3), and the hydraulic module (4).

## Revendications

1. Soupape d'aspiration (1) à commande électromagnétique destinée à une pompe à carburant à haute pression (2), ladite soupape comprenant un ensemble magnétique (3) et un module hydraulique (4), le module hydraulique (4) s'engageant au moins par portions dans une bobine magnétique annulaire (5) de l'ensemble magnétique (3), **caractérisée en ce qu'**un matériau thermoconducteur (6) et/ou un corps thermoconducteur (7) est/sont disposé(s) entre la bobine magnétique (5) et le module hydraulique (4), **en ce que** le module hydraulique (4) comprend un noyau polaire (11) qui s'engage dans la bobine magnétique (5) et sur lequel le matériau thermoconducteur (6) et/ou le corps thermoconducteur (7) viennent directement en appui, **en ce que** le noyau polaire (11) est relié à un corps de soupape (13) par le biais d'un manchon de soudage (12), et **en ce que** le matériau thermoconducteur (6) et/ou le corps thermoconducteur (7) s'étendent au-delà du manchon de soudage (12) et ont une fonction d'étanchéité du manchon de soudage (12).

2. Soupape d'aspiration selon la revendication 1, **caractérisée en ce que** le matériau thermoconducteur (6) et/ou le corps thermoconducteur (7) sont disposés dans un espace annulaire (8) ménagé entre la bobine magnétique (5) et le module hydraulique (4).

3. Soupape d'aspiration selon la revendication 1 ou 2,
**caractérisée en ce que** le matériau thermoconducteur (6) est une pâte thermoconductrice.

4. Soupape d'aspiration selon l'une des revendications précédentes,
**caractérisée en ce que** le corps thermoconducteur (7) a sensiblement la forme d'un manchon et/ou est déformable élastiquement.

5. Soupape d'aspiration selon l'une des revendications précédentes,
**caractérisée en ce que** le matériau thermoconducteur (6) et/ou le corps thermoconducteur (7) rempli(ssen)t au moins partiellement un espace axial (9) ménagé entre l'ensemble magnétique (3), de préférence entre un enrobage de matière synthétique (10) de l'ensemble magnétique (3) qui entoure au moins par portions la bobine magnétique (5), et le module hydraulique (4).
